# EUROPÄISCHE PATENTANMELDUNG

(11) **EP 3 629 241 A1**
(43) Veröffentlichungstag der Anmeldung: **01.04.2020**
(21) Anmeldenummer: 19197667.9
(22) Anmeldetag: 17.09.2019
(51) Int. Cl.: G06K 9/40, G06K 9/46, G06K 9/62, G06K 9/00

(54) **VORRICHTUNG UND VERFAHREN ZUR AUTOMATISCHEN BILDVERBESSERUNG BEI FAHRZEUGEN**

(30) Priorität: 26.09.2018 DE 102018216413
(71) Anmelder: Robert Bosch GmbH, 70442 Stuttgart (DE)
(72) Erfinder: Kis, Levente, 1138 Budapest (HU); Borcs, Attila, 1133 Budapest (HU); Kis, Kornel Istvan, 8300 Tapolca (HU); Korosi-Szabo, Peter, 1119 Budapest (HU)

(57) **Zusammenfassung**

Die vorliegende Erfindung betrifft eine Vorrichtung und ein Verfahren zur automatischen Bildverbesserung in Fahrzeugen, insbesondere in Landfahrzeugen. Eine Vorrichtung (100) zur Bildverbesserung für ein Fahrzeug (110) weist eine Kamera (120) auf, die dazu eingerichtet ist, ein Primärbild (150) zu erfassen, und ein Bildbearbeitungsmodul (200), das dazu eingerichtet ist, aus dem Primärbild (150) ein Ergebnisbild (190) zu bestimmen. Dabei weist das Bildbearbeitungsmodul (200) eine Vielzahl von Bildbearbeitungsfiltern (221, 222, 223, 224) auf, von denen jeder dazu eingerichtet ist, das Primärbild (150) in jeweils ein Zwischenbild (231, 232, 233, 234) zu transformieren, ein Bewertungsmodul (240), das für jedes der, mittels des Bildbearbeitungsfilters (231, 232, 233, 234) transformierten, Zwischenbilder (231, 232, 233, 234) eine Qualitätsmaßzahl (241, 242, 243, 244) ausgibt, ein Auswahlmodul (260), welches das Zwischenbild (231, 232, 233, 234) mit der höchsten Qualitätsmaßzahl (241, 242, 243, 244) auswählt und als das Ergebnisbild (190) ausgibt, und ein lernendes neuronales Netz (300), das dazu eingerichtet ist, in einer Lernphase für jedes Primärbild (150) den Bildbearbeitungsfilter (221, 222, 223, 224), aus der Vielzahl von Bildbearbeitungsfiltern (221, 222, 223, 224), mit der höchsten Qualitätsmaßzahl (241, 242, 243, 244) des Zwischenbildes (231, 232, 233, 234) zu lernen, und nach der Lernphase für jedes Primärbild (150) den Bildbearbeitungsfilter (221, 222, 223, 224), aus der Vielzahl von Bildbearbeitungsfiltern (221, 222, 223, 224), mit der höchsten Qualitätsmaßzahl (241, 242, 243, 244) des Zwischenbildes (231, 232, 233, 234) auszuwählen.

## Beschreibung

Die vorliegende Erfindung betrifft eine Vorrichtung und ein Verfahren zur automatischen Bildverbesserung bei Fahrzeugen, insbesondere bei Landfahrzeugen. Die automatische Bildverbesserung wird bei Fahrzeugen beispielsweise zur Unterstützung bei einer Reihe von Assistenzsystemen verwendet oder diese kommt auch bei einem zumindest teilweise automatisiert fahrenden Fahrzeug zum Einsatz.

### Stand der Technik

Fahrzeuganwendungen, die auf der Sensorik einer Kamera basieren, sind in vielen Fällen auf eine hohe Qualität des Kamerabilds angewiesen. Die Qualität des Kamerabilds kann sich in manchen Szenarien plötzlich verändern, z.B. beim Durchfahren eines Tunnels oder bei plötzlichem Wetterwechsel. Bei einigen Kamera-basierten Systemen kann dies zu Fehlentscheidungen z.B. bei Assistenzsystemen führen.

### Offenbarung der Erfindung

Es ist Aufgabe der vorliegenden Erfindung, die Qualität zumindest von manchen Kamerabildern zu verbessern.

Ein Aspekt der Erfindung betrifft ein Verfahren zur automatischen Bildverbesserung bei einem Fahrzeug, mit den Schritten:
- Erfassen eines Primärbildes, mittels einer Kamera;
- Transformieren des Primärbildes, mittels einer Vielzahl von Bildbearbeitungsfiltern, in eine Vielzahl von Zwischenbildern;
- Bestimmen einer Qualitätsmaßzahl für jedes der, mittels des Bildbearbeitungsfilters transformierten, Zwischenbilder;
- Auswählen, mittels eines Auswahlmoduls, des Zwischenbildes mit der höchsten Qualitätsmaßzahl und ausgeben als das Ergebnisbild, wobei ein lernendes neuronales Netz in einer Lernphase für jedes Primärbild den Bildbearbeitungsfilter, aus der Vielzahl von Bildbearbeitungsfiltern, mit der höchsten Qualitätsmaßzahl des Zwischenbildes lernt, und das lernende neuronale Netz nach der Lernphase für jedes Primärbild den Bildbearbeitungsfilter, aus der Vielzahl von Bildbearbeitungsfiltern, mit der höchsten Qualitätsmaßzahl des Zwischenbildes auswählt.

Das Fahrzeug, für welches das Verfahren ausgeführt wird, weist eine Kamera auf, die ein Primärbild zu erfasst, und ein Bildbearbeitungsmodul, das dazu eingerichtet ist, aus dem Primärbild ein Ergebnisbild zu bestimmen. Das Verfahren bzw. das Ergebnisbild kann beispielsweise zur Ansteuerung von Aktoren des Fahrzeugs genutzt werden.

Ein Fahrzeug kann ein Landfahrzeug sein, es kann insbesondere ein Personenkraftwagen, ein Transporter, ein Lastwagen, ein landgebundenes Spezialfahrzeug, ein Amphibienfahrzeug, ein Schiff oder ein Flugzeug sein. Die Kamera kann eine Einzelkamera sein, eine Stereokamera oder eine Vielzahl von Kameras, beispielsweise in Form einer Surround-View-Kamera. Die Kamera kann dazu eingerichtet sein, Einzelbilder zu erfassen oder eine Sequenz von Bildern. Das Bild, das von der Kamera ohne weitere Bearbeitung erfasst wird, wird als "Primärbild", gelegentlich auch als "raw image", bezeichnet. Das Bild, das, nach einer Bearbeitung durch das Bildbearbeitungsmodul, an ein Kamerabasiertes System ausgegeben wird, wird als "Ergebnisbild" bezeichnet. In vielen Systemen muss das Ergebnisbild bestimmte Qualitätsanforderungen erfüllen, z.B. in Bezug auf Helligkeit und/oder Kontrast. Systeme, welche derartige Ergebnisbilder als Basis verwenden, umfassen beispielsweise Assistenzsysteme, z.B. Systeme zur Spurerkennung, zur Erkennung fester Objekte, wie Gebäude oder Landmarken, oder zur Erkennung beweglicher Objekte, wie z.B. andere Fahrzeuge oder Fußgänger. Diese Ergebnisbilder können beispielsweise von einem zumindest teilweise automatisiert fahrenden Fahrzeug verwendet werden.

Das Bildbearbeitungsmodul weist eine Vielzahl von Bildbearbeitungsfiltern auf, von denen jeder, in einem weiteren Schritt, das Primärbild in jeweils ein Zwischenbild transformiert. Ein Bildbearbeitungsfilter kann beispielsweise eine Farb- oder Kontrasttransformation vornehmen, wie z.B. den Gammawert verändern, aber auch wesentlich komplexere Transformationen durchführen. Die Transformationen können durch Algorithmen zur Bilderkennung unterstützt sein. Verschiedene Einstellungen eines Filters gelten dabei als verschiedene Bildbearbeitungsfilter.

In einem weiteren Schritt wird für jedes der, mittels des Bildbearbeitungsfilters transformierten, Zwischenbilder mittels eines Bewertungsmoduls, eine Qualitätsmaßzahl ausgegeben. Das Bewertungsmodul kann in manchen Ausführungsformen sehr einfach gestaltet sein, z.B. eine einfache Erkennung der durchschnittlichen Helligkeit des Bilds und/oder ein Maßstab für den Kontrast. Das Bewertungsmodul kann auch aufwändig gestaltet sein, z.B. kann es die Ergebnisse verschiedener Bilderkennungsalgorithmen vergleichen und daraus eine Qualitätsmaßzahl ableiten. Die Qualitätsmaßzahl ist beispielsweise ein Skalar, mittels dessen ein schneller Vergleich der Qualität der Zwischenbilder möglich ist. Insbesondere ist es mittels der Qualitätsmaßzahl möglich, verschiedene Typen von Bildern mit verschiedenen Typen von Qualitätsproblemen zu vergleichen. Qualitätsprobleme können z.B. geringen Kontrast, Weiß- oder Farbsättigung ("saturated") oder verzerrte Bilder umfassen. Jedes der genannten Qualitätsprobleme kann einen speziellen Filter zur Bildverbesserung erfordern. Ein Bild kann mehr als ein einziges Qualitätsproblem aufweisen. Die Qualitätsmaßzahl kann auch negativ sein, insbesondere wenn keiner der Filter zu einer Verbesserung, sondern zu einer Verschlechterung, des Primärbildes führt.

In einem weiteren Schritt wird, mittels eines Auswahlmoduls, das Zwischenbild mit der höchsten Qualitätsmaßzahl ausgewählt und als das Ergebnisbild ausgegeben. Das Ergebnisbild kann unter bestimmten Voraussetzungen das Primärbild sein, beispielsweise in dem Fall, wenn keiner der Filter zu einer Verbesserung des Primärbildes führt oder wenn das Primärbild bereits eine gute Qualität aufweist.

Das Bildbearbeitungsmodul weist außerdem ein lernendes neuronales Netz auf, das während einer Lernphase für jedes Primärbild den Bildbearbeitungsfilter, aus der Vielzahl von Bildbearbeitungsfiltern, mit der höchsten Qualitätsmaßzahl des Zwischenbildes lernt, und nach der Lernphase für jedes Primärbild den Bildbearbeitungsfilter, aus der Vielzahl von Bildbearbeitungsfiltern, mit der höchsten Qualitätsmaßzahl des Zwischenbildes auswählt. Das Bildbearbeitungsmodul weist also verschiedene Betriebsmodi bzw. Betriebsphasen auf: Während der Lernphase, und nach der Lernphase. Dabei werden während der Lernphase die Ausgaben des neuronalen Netzes nicht verwendet oder das neuronale Netz gibt keine Werte aus. Die Werte umfassen z.B. Typ und Parameter der Bildbearbeitungsfilter. Nach der Lernphase werden die von dem neuronalen Netz ausgegebenen Werte zur Auswahl der Bildbearbeitungsfilter verwendet. Nach der ersten Lernphase, bzw. nachdem das neuronale Netz ein gewisses "Grundwissen" aufgebaut hat, kann also durch das Bildbearbeitungsmodul eine automatische Bildverbesserung stattfinden. Die Lernphase kann in einer Ausführungsform beispielsweise auf einem Server oder auf einem Prozessor in dem Fahrzeug durchgeführt werden. In einer Ausführungsform kann das neuronale Netz auf einem Prozessor in dem Fahrzeug betrieben werden.

In einer Ausführungsform kann bei unbekannten Primärbildern die Lernphase zeitweise wieder aufgenommen werden, d.h. das neuronale Netz kann noch "dazulernen", wenn es bereits eingesetzt wird. Dadurch erhält das Bildbearbeitungsmodul eine adaptive Charakteristik.

In einer Ausführungsform findet, z.B. zur Beschleunigung der Ausgabe des neuronalen Netzes, eine Kategorisierung des Typs von Bildern durch das lernende neuronale Netz statt.

In einer Ausführungsform verwendet das lernende neuronale Netz weiterhin ein Kategorisierungsmodul, das, für jedes Primärbild eine Beleuchtungskategorie bestimmt. In einer Ausführungsform kann das Kategorisierungsmodul weitere Kategorien bestimmen, z.B. eine Verzerrung.

In einer Ausführungsform ist mindestens einer aus der Vielzahl von Bildbearbeitungsfiltern dazu ausgeführt, ein sogenanntes bilaterales Gitter als Bildbearbeitungsfilter zu verwenden. Die Grundsätze eines bilateralen Gitters sind beispielsweise in "Chen, J.; et al.: Real-time Edge-Aware Image Processing with the Bilateral Grid. MIT, 2007" beschrieben. Bei einem bilateralen Gitter stellen die x- und y-Werte Pixel-Positionen dar, die z-Werte sind der Intensitätsabstand, d.h. z.B. die Helligkeit in einem Schwarz-Weiß-Bild. Die Verwendung eines bilateralen Gitters weist unter anderem den Vorteil einer kanten-erhaltenden Glättung ("edge-aware brush") des Bildes auf. Auch bei der Verwendung eines bilateralen Gitters werden verschiedene Filtereinstellungen als verschiedene Bildbearbeitungsfilter aufgefasst.

In einer Ausführungsform werden Farbparameter des Primärbilds getrennt von Parametern des bilateralen Gitters, insbesondere von Parametern einer sog. "Orientierungskarte" (guidance map) verwendet. Dabei ist in dem bilateralen Gitter jedes der Element eine Farbtransformationsmatrix (Color Transformation Matrix, CTM), mit einer Darstellung als x-y-z-Koordinaten. Die x-y-Koordinaten können dabei eine gegenüber dem Primärbild reduzierte Auflösung aufweisen. In diesem Fall definiert die Orientierungskarte (guidance map) die Korrespondenz zwischen den Pixeln des Primärbildes und der CTM. Die Position jedes Pixels definiert, welche CTM zu verwenden ist und der Wert der Orientierungskarte bestimmt die zugehörige z-Koordinate. Im Fall von Grauwerten kann die z-Koordinate beispielsweise eine Angabe von Helligkeitswerten sein. Bei der vorliegenden Erfindung sind die z-Koordinaten nicht notwendigerweise Helligkeitswerte; außerdem können die z-Koordinaten gelernt werden. Daher stellen die Parameter der Orientierungskarte die Transformation des farbigen Primärbildes zu der Orientierungskarte dar. Dies kann verwendet werden, um die Farbinformation eines Primärbildes von der Kanteninformation zu trennen. Damit kann z.B. die Lernphase des neuronalen Netzes effektiver gestaltet werden.

In einer Ausführungsform umfasst die Vielzahl von Bildbearbeitungsfiltern einen Filter zur Veränderung der Helligkeit, einen Filter zur Veränderung des Kontrasts, einen Filter zur Veränderung der Farbe, einen Verzerrungsfilter, einen Schärfefilter und/oder einen weiteren Filter. Die weiteren Filter können z.B. Hochpass- oder Tiefpass-Filter sein. Ein Verzerrungsfilter kann beispielsweise eingesetzt werden, um stürzende Linien oder Kamera-Artefakte zu kompensieren.

In einer Ausführungsform weist die Vorrichtung ferner ein Kategorisierungsmodul auf, das dazu eingerichtet ist, für jedes Primärbild eine Beleuchtungskategorie zu bestimmen, wobei das lernende neuronale Netz dazu eingerichtet ist, während der Lernphase für jedes Primärbild und/oder für jede Beleuchtungskategorie den Bildbearbeitungsfilter, aus der Vielzahl von Bildbearbeitungsfiltern, mit der höchsten Qualitätsmaßzahl des Zwischenbildes zu lernen, und nach der Lernphase für jedes Primärbild und/oder für jede Beleuchtungskategorie den Bildbearbeitungsfilter, aus der Vielzahl von Bildbearbeitungsfiltern, mit der höchsten Qualitätsmaßzahl des Zwischenbildes auszuwählen. Das Kategorisierungsmodul kann zu einer Verbesserung und/oder einer Beschleunigung der Bildanalyse durch das neuronale Netz führen.

In einer Ausführungsform verwendet das Kategorisierungsmodul mindestens eines von folgenden Programmen: eine Beleuchtungsgrobabschätzung, eine Beschreibung der Wetterdaten, eine Beschreibung der realen Umgebung, eine Zeitinformation, oder eine weitere Information. Dies führt zur Anpassung mindestens eines Parameters der Bildbearbeitungsfilter, was beispielsweise für wechselnde Lichtverhältnisse genutzt werden kann. Wechselnde Lichtverhältnisse z.B. bei der Einfahrt des Fahrzeuges in einen Tunnel auftreten, oder bei plötzlichen dunklen Wolken oder Starkregen.

Dabei berücksichtigt eine Beleuchtungsgrobabschätzung z.B. die vorwiegenden Beleuchtungsumstände. Die Beschreibung der Wetterdaten erfolgt beispielsweise aus einem Netzwerk, z.B. von einem vordefinierten Provider, oder auch von anderen, z.B. kooperierenden, Fahrzeugen. Die Beschreibung der realen Umgebung kann durch fahrzeuginterne Karten geschehen, durch GPS-Systeme, oder durch ein mit aktuellen Verkehrsdaten angereichertes GPS-System. Die Zeitinformation kann einen Zeitpunkt und ein Datum enthalten und beispielsweise einen ersten Indikator für Tag oder Nacht liefern. Die weiteren Informationen können z.B. astronomische Daten umfassen, wie z.B. Sonnenuntergang.

In einer Ausführungsform ist die Kamera dazu eingerichtet , eine Sequenz von Primärbildern zu erfassen. Dies kann z.B. verwendet werden, um aus der Vergangenheit, d.h. vorangegangenen Primärbildern, zusätzliche Schlüsse zur ziehen. So kann beispielsweise aus einer schnellen Änderung der Lichtverhältnisse, im Vergleich mit vorangegangenen Primärbildern, der Schluss "Durchfahrt durch Tunnel" gezogen werden; bei langsamen Änderungen z.B. der Schluss "Dämmerung".

In einer Ausführungsform ist, wenn ein vordefiniertes Qualitätskriterium erfüllt ist, das Ergebnisbild gleich dem Primärbild. Das Qualitätskriterium kann z.B. erfüllt sein, wenn die Qualität des Primärbildes hoch genug ist, d.h. wenn beispielsweise Helligkeit, Kontrast oder Schärfe des Primärbildes ausreichend sind, und/oder die Verzerrung des Primärbildes gering ist. Das Qualitätskriterium kann auch erfüllt sein, wenn keiner der Bildbearbeitungsfilter eine höhere Qualität irgendeines Zwischenbildes erzielt.

Ein Aspekt der Erfindung betrifft eine Vorrichtung zur Bildverbesserung für ein Fahrzeug. Die Vorrichtung weist eine Kamera auf, die dazu eingerichtet ist, ein Primärbild zu erfassen, und ein Bildbearbeitungsmodul, das dazu eingerichtet ist, aus dem Primärbild ein Ergebnisbild zu bestimmen. Dabei weist das Bildbearbeitungsmodul eine Vielzahl von Bildbearbeitungsfiltern auf, von denen jeder dazu eingerichtet ist, das Primärbild in jeweils ein Zwischenbild zu transformieren. Weiterhin weist die Vorrichtung ein Bewertungsmodul auf, das für jedes der, mittels des Bildbearbeitungsfilters transformierten, Zwischenbilder eine Qualitätsmaßzahl ausgibt, und ein Auswahlmodul, welches das Zwischenbild mit der höchsten Qualitätsmaßzahl auswählt und als das Ergebnisbild ausgibt. Ferner weist die Vorrichtung ein lernendes neuronales Netz auf, das dazu eingerichtet ist, in einer Lernphase für jedes Primärbild den Bildbearbeitungsfilter aus der Vielzahl von Bildbearbeitungsfiltern mit der höchsten Qualitätsmaßzahl des Zwischenbildes zu lernen, und nach der Lernphase für jedes Primärbild den Bildbearbeitungsfilter aus der Vielzahl von Bildbearbeitungsfiltern mit der höchsten Qualitätsmaßzahl des Zwischenbildes auszuwählen.

Ein weiterer Aspekt der Erfindung betrifft ein Bildbearbeitungsmodul, das dazu eingerichtet ist, aus dem Primärbild ein Ergebnisbild für ein Fahrzeug zu bestimmen. Das Bildbearbeitungsmodul weist eine Vielzahl von Bildbearbeitungsfiltern auf, von denen jeder dazu eingerichtet ist, das Primärbild in jeweils ein Zwischenbild zu transformieren. Ein Bildbearbeitungsfilter kann beispielsweise eine Farb- oder Kontrasttransformation vornehmen, wie z.B. den Gammawert verändern, aber auch wesentlich komplexere Transformationen durchführen. Das Bildbearbeitungsmodul weist weiterhin ein Bewertungsmodul auf, das für jedes der, mittels des Bildbearbeitungsfilters transformierten, Zwischenbilder eine Qualitätsmaßzahl ausgibt. Die Qualitätsmaßzahl ist beispielsweise ein Skalar, mittels dessen ein schneller Vergleich der Qualität der Zwischenbilder möglich ist. Das Bildbearbeitungsmodul weist ferner ein Auswahlmodul auf, welches dazu eingerichtet ist, das Zwischenbild mit der höchsten Qualitätsmaßzahl auszuwählen und als das Ergebnisbild auszugeben.

Das Bildbearbeitungsmodul weist außerdem ein lernendes neuronales Netz auf, das dazu eingerichtet ist, während einer Lernphase für jedes Primärbild den Bildbearbeitungsfilter, aus der Vielzahl von Bildbearbeitungsfiltern, mit der höchsten Qualitätsmaßzahl des Zwischenbildes zu lernen, und nach der Lernphase für jedes Primärbild den Bildbearbeitungsfilter, aus der Vielzahl von Bildbearbeitungsfiltern, mit der höchsten Qualitätsmaßzahl des Zwischenbildes auszuwählen. Während der Lernphase werden die Ausgaben des neuronalen Netzes nicht verwendet oder das neuronale Netz gibt keine Werte aus. Die Werte umfassen z.B. Typ und Parameter der Bildbearbeitungsfilter. Nach der Lernphase werden die von dem neuronalen Netz ausgegebenen Werte zur Auswahl der Bildbearbeitungsfilter verwendet.

Ein weiterer Aspekt der Erfindung betrifft eine Verwendung einer Vorrichtung oder eines Verfahrens zur automatischen Bildverbesserung in einem Fahrzeug, wie dies oben ausgeführt ist.

Ein weiterer Aspekt der Erfindung betrifft ein Programmelement, welches, wenn es auf einer Prozessoreinheit ausgeführt wird, dazu eingerichtet ist, das genannte Verfahren durchzuführen. Dabei kann die Prozessoreinheit spezialisierte Hardware zur Graphikbeschleunigung, eine sog. Graphikkarte, und/oder spezialisierte Hardware mit Funktionalität eines neuronalen Netzes umfassen, z.B. eine NNP-Einheit (NNP: Neural Network Processing) aufweisen.

Ein weiterer Aspekt der Erfindung betrifft ein computerlesbares Medium, auf dem das genannte Programmelement gespeichert ist.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigen schematisch:
**Figur 1** eine beispielhafte Sequenz von Bildern, die gemäß eines Aspekts der Erfindung von einer Kamera erfasst wurde;
**Figur 2** ein Fahrzeug mit einer Ausführungsform der oben beschriebenen Vorrichtung;
**Figur 3** eine Ausführungsform eines Bildbearbeitungsmoduls gemäß eines Aspekts der vorliegenden Erfindung;
**Figur 4** eine weitere Ausführungsform eines Bildbearbeitungsmoduls gemäß eines weiteren Aspekts der vorliegenden Erfindung;
**Figur 5** ein Beispiel eines Bildbearbeitungsfilters gemäß eines weiteren Aspekts der vorliegenden Erfindung;
**Figur 6** ein Beispiel eines Kategorisierungsmoduls gemäß eines weiteren Aspekts der vorliegenden Erfindung;
**Figur 7** ein Ausführungsbeispiel gemäß eines Aspekts der vorliegenden Erfindung zur Bildverbesserung bei einem Fahrzeug.

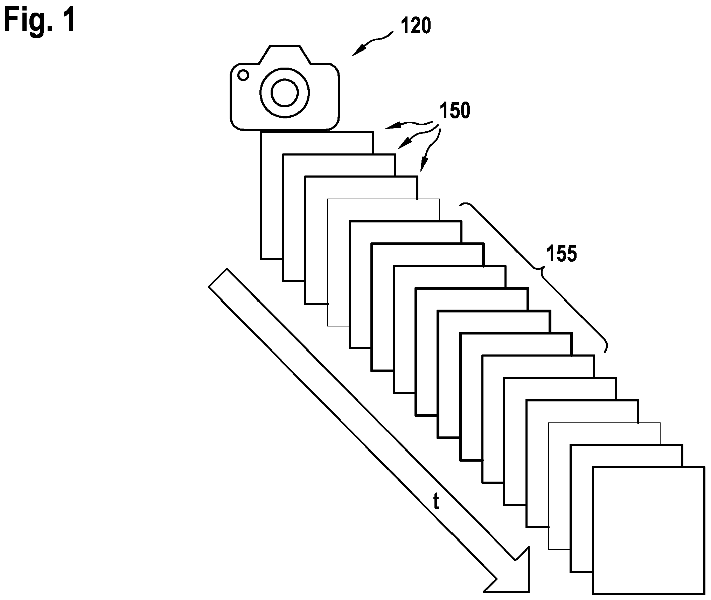

Nach **Figur 1** erfasst eine Kamera 120, die beispielsweise an einem Fahrzeug angeordnet ist, eine beispielhafte Sequenz von Primärbildern 150, gemäß eines Aspekts der vorliegenden Erfindung. Diese Sequenz von Primärbildern 150 ist über einem Zeitstrahl t dargestellt. Ein Teil der Primärbilder 150, der mit dem Bezugszeichen 155 markiert ist, weist dabei Qualitätsprobleme auf, so dass dieser Teil der Primärbilder 150 nicht - bzw. nicht ohne weitere Bearbeitung - für z.B. Assistenzsysteme des Fahrzeugs verwendbar ist. Diese Primärbilder 155 können an eine Vorrichtung 100 zur Bildverbesserung, insbesondere zur automatischen Bildverbesserung, weitergeleitet werden, so dass zumindest ein Teil dieser Bilder, nach der Bildverbesserung, als Ergebnisbild 190 für die Assistenzsysteme verwendbar ist. Die restlichen Primärbilder 150 können, je nach Ausführungsform, direkt an die Assistenzsysteme weitergeleitet werden oder auch mit bestimmten Filtern behandelt werden.

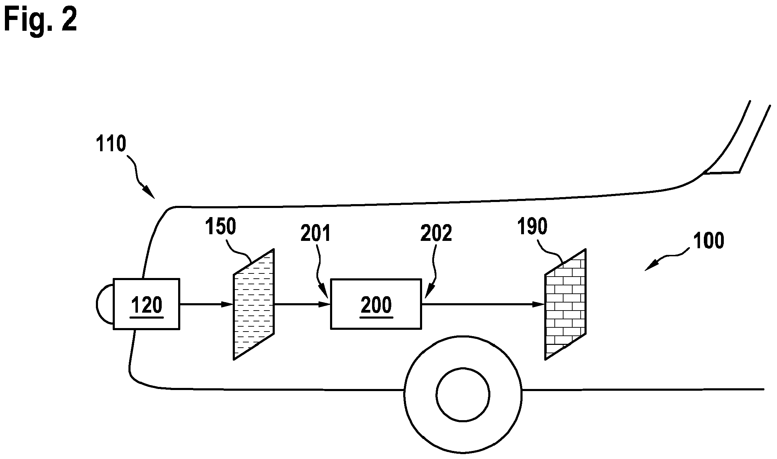

**Figur 2** zeigt schematisch ein Fahrzeug 110 mit einer Ausführungsform der oben beschriebenen Vorrichtung 100. Die Vorrichtung 100 weist eine Kamera 120 auf, die z.B. im Bug des Fahrzeugs 110 angeordnet ist. Die Vorrichtung 100 kann auch mehrere Kameras 120 aufweisen. Die Kamera oder Kameras 120 können auch an anderen Stellen des Fahrzeugs 110 angeordnet sein, z.B. in den Seitenspiegeln. Jede der Kameras 120 erfasst ein Primärbild 150 oder eine Sequenz von Primärbildern 150. Das Primärbild 150 wird an den Eingang 201 eines Bildbearbeitungsmoduls 200 übertragen. Nach der Bearbeitung in dem Bildbearbeitungsmodul 200 steht am Ausgang 202 des Bildbearbeitungsmoduls 200 ein Ergebnisbild 190 zur Verfügung, das beispielsweise von einem Assistenzsystem (hier nicht gezeigt) verwendet werden kann. Das Bildbearbeitungsmodul 200 kann Teil einer Prozessoreinheit (hier nicht gezeigt) sein. Dabei kann die Prozessoreinheit spezialisierte Hardware zur Graphikbeschleunigung, eine sog. Graphikkarte, und/oder spezialisierte Hardware mit Funktionalität eines neuronalen Netzes umfassen, z.B. eine NNP-Einheit (NNP: Neural Network Processing) aufweisen.

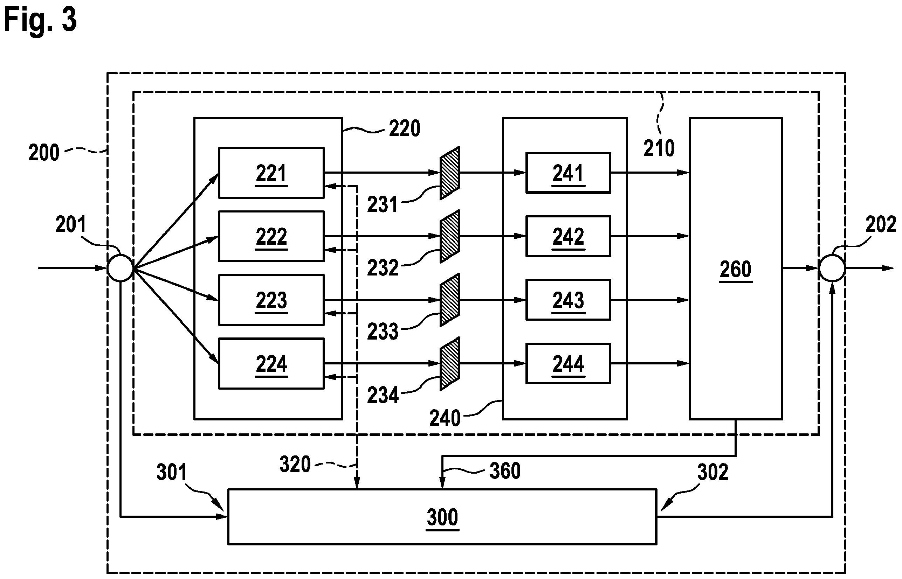

**Figur 3** zeigt schematisch eine Ausführungsform eines Bildbearbeitungsmoduls 200 gemäß der vorliegenden Erfindung. An den Eingang 201 des Bildbearbeitungsmoduls 200 wird z.B. das Primärbild 150 von einer Kamera 120 übertragen. Von einem Eingang 201 wird Primärbild 150 an eine Filterbank 220 mit einer Vielzahl von Bildbearbeitungsfiltern 221, 222, 223, 224 übertragen. Diese Bildbearbeitungsfilter können beispielsweise ein sogenanntes bilaterales Gitter, einen Filter zur Veränderung der Helligkeit, einen Filter zur Veränderung des Kontrasts, einen Filter zur Veränderung der Farbe, einen Verzerrungsfilter, einen Schärfefilter und/oder einen weiteren Filter umfassen. Weitere Filter können z.B. Hochpass- oder Tiefpass-Filter sein. Ein Verzerrungsfilter kann beispielsweise eingesetzt werden, um stürzende Linien oder Kamera-Artefakte zu kompensieren. Einige dieser verschiedenen Filter können auch derselbe Filtertyp sein, aber jeweils andere Parameter verwenden. Jeder aus der Vielzahl von Bildbearbeitungsfiltern 221, 222, 223, 224 ist dazu eingerichtet , das Primärbild 150 in jeweils ein Zwischenbild 231, 232, 233, 234 zu transformieren. Jedes der Zwischenbilder 231, 232, 233, 234 wird von einem Bewertungsmodul 240 bewertet, das für jedes der, mittels des jeweiligen Bildbearbeitungsfilters 221, 222, 223, 224 transformierten, Zwischenbilder 231, 232, 233, 234 eine Qualitätsmaßzahl ausgibt. Das Bewertungsmodul 240 besteht in gezeigten beispielsweise aus den Teilmodulen 241, 242, 243, 244, an deren Ausgang je eine Qualitätsmaßzahl zur Verfügung steht und an ein Auswahlmodul 260 übertragen wird. Die Qualitätsmaßzahl kann ein Skalar sein und kann größer Null ("verbessert"), gleich Null ("keine Qualitätsverbesserung") oder kleiner Null ("verschlechter") sein. Einer der Bildbearbeitungsfilter, z.B. 224, kann auch ein "direkter Filter" sein, d.h. das Primärbild 150 wird ohne Änderung an ein Zwischenbild 234 übertragen und mit einer Qualitätsmaßzahl (z.B. Null) bewertet. Das Auswahlmodul 260 verwendet das Zwischenbild mit der höchsten Qualitätsmaßzahl und gibt das gewählte Zwischenbild über einen Ausgang 202 des Bildbearbeitungsmoduls 200 aus. Dieses Zwischenbild steht dann nachgeordneten Modulen als Ergebnisbild 190 zur Verfügung.

Das Primärbild 150 wird außerdem an einen Eingang 301 eines neuronalen Netzes 300 übertragen. Während einer Lernphase lernt das neuronale Netz 300 aus dem Primärbild 150, aus dem verwendeten Bildbearbeitungsfilter 221, 222, 223, 224 (über ein Interface 320) und dem Auswahlmodul 260 (über ein Interface 360), welcher Bildbearbeitungsfilter für welches Primärbild am geeignetsten ist. Nach der Lernphase wählt das neuronale Netz 300 den für dieses Primärbild 150 optimalen Bildbearbeitungsfilter (über das Interface 320) aus und gibt das Ergebnisbild 190 z.B. direkt über einen Ausgang 302 des neuronalen Netzes 300 an den Ausgang 202 des Bildbearbeitungsmoduls 200 aus. Nach der Lernphase wird die gesamte Rechenleistung des Bildbearbeitungsmoduls 200 also nur noch dann benötigt, wenn das Primärbild 150 für das neuronale Netz 300 unbekannt ist; d.h. in den meisten Fällen wird nur noch der ausgewählte Bildbearbeitungsfilter beschaltet. Die Lernphase ist also deutlich rechenintensiver als die Zeit nach der Lernphase. In einigen Ausführungsformen findet die Lernphase daher auf einem Server statt und das "gelernte" neuronale Netz 300 wird dann auf die Prozessoreinheit des Fahrzeugs übertragen.

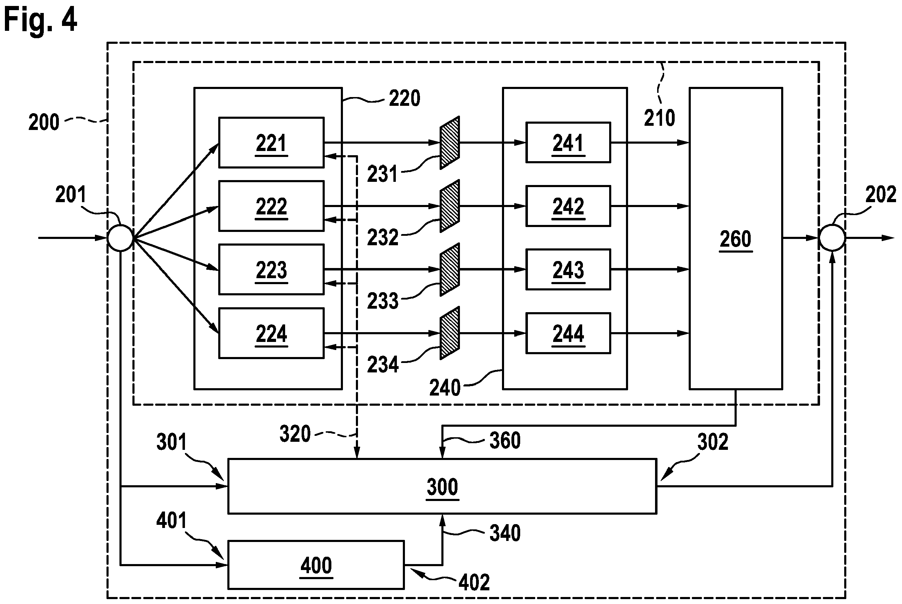

**Figur 4** zeigt eine weitere Ausführungsform eines Bildbearbeitungsmoduls 200 gemäß eines weiteren Aspekts der vorliegenden Erfindung. Dabei sind die meisten Komponenten und Funktionalitäten identisch mit **Figur 3****.** Diese Ausführungsform weist aber zusätzlich ein Kategorisierungsmodul 400 auf. Dabei wird das Primärbild 150 an einen Eingang 401 des Kategorisierungsmoduls 400 übertragen. In dem Kategorisierungsmodul 400 findet eine Kategorisierung des Primärbilds 150 statt. Dabei kann für jedes Primärbild 150 eine Beleuchtungskategorie bestimmt werden. In weiteren Ausführungsformen kann das Kategorisierungsmodul 400 auch weitere Kategorisierungen vornehmen, z.B. Bestimmung einer Bildverzerrung.

Das Kategorisierungsmodul 400 verwendet mindestens eines von folgenden Programmen: einer Beleuchtungsgrobabschätzung, einer Beschreibung der Wetterdaten, einer Beschreibung der realen Umgebung, einer Zeitinformation, oder einer weiteren Information. Nach dieser Bearbeitung steht an einem Ausgang 402 des Kategorisierungsmoduls 400 beispielsweise eine Beleuchtungskategorie zur Verfügung. Diese Beleuchtungskategorie wird (über ein Interface 340) dem neuronalen Netz 300 zur Verfügung gestellt. Das neuronale Netz 300 kann die Beleuchtungskategorie zusätzlich zum oder anstatt des Primärbilds 150 verwenden. Das Kategorisierungsmodul 400 kann daher zu einer Verbesserung und/oder einer Beschleunigung der Bildanalyse durch das neuronale Netz 300 führen.

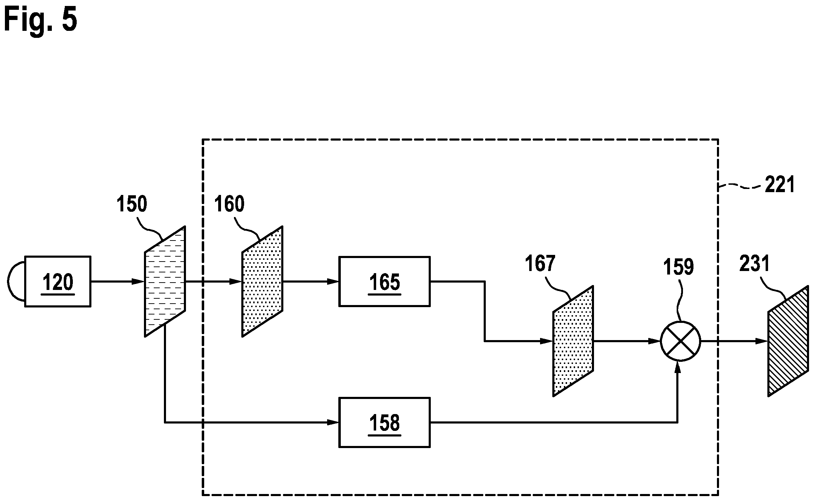

**Figur 5** zeigt ein Beispiel eines Bildbearbeitungsfilters 221 gemäß eines Aspekts der vorliegenden Erfindung; dieser Bildbearbeitungsfilters 221 verwendet ein sogenanntes bilaterales Gitter. Dazu wird - im oberen Strang von **Figur 5** - ein informationsreduziertes Bild 160 (z.B. ein Schwarz-Weiß-Bild) 160 verwendet. Dies wird, mittels der Transformation 165, als bilaterales Gitter 167 dargestellt. Die Verwendung von bilateralen Gitter weist unter anderem den Vorteil einer kanten-erhaltenden Glättung des Bildes auf. Im unteren Strang von **Figur 5** werden die Farbparameter 158 des Primärbilds 150 übertragen. In der Einheit 159 werden das bilaterale Gitter 167 mit den Farbparametern 158 zusammengeführt, so dass ein Zwischenbild 231 entsteht, das für nachgeordnete Programme in bestimmten Fällen eine höhere Qualität aufweist. Diese Trennung der Farbinformation des Primärbildes 150 von der Kanteninformation kann verwendet werden, um die Lernphase des neuronalen Netzes effektiver zu gestalten.

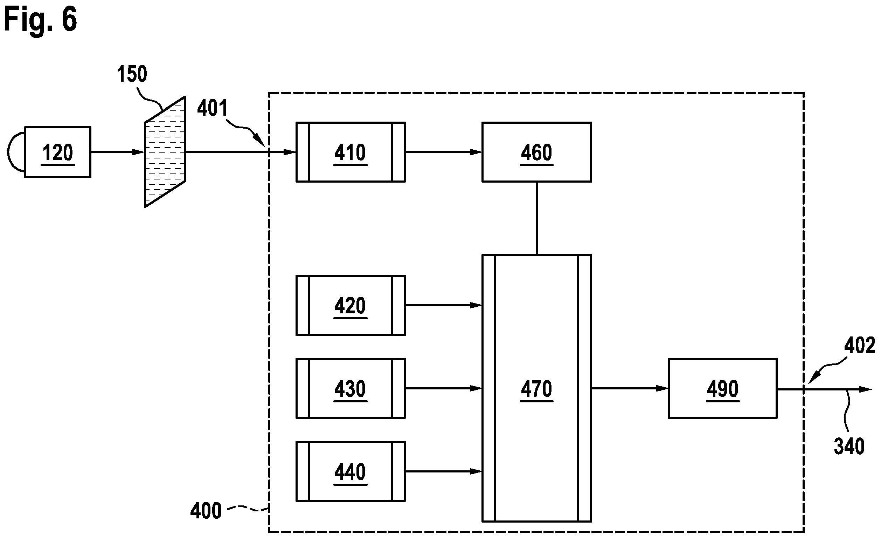

**Figur 6** zeigt ein Beispiel eines Kategorisierungsmoduls 400 gemäß eines weiteren Aspekts der vorliegenden Erfindung. Dabei wird das Primärbild 150, von der Kamera 120, an einen Eingang 401 des Kategorisierungsmoduls 400 übertragen. Anschließend findet mittels eines Abschätzungsmoduls 410 eine Beleuchtungsgrobabschätzung 460 statt. Diese kann dann - je nach Ausführungsform - von dem Kombinationsmodul 470 als Kategorisierungsergebnis 490 an einen Ausgang 402 weitergeleitet und (über das Interface 340) an das neuronale Netz 300 weitergeleitet werden (siehe **Figur 4**). In einigen Ausführungsformen verwendet das Kombinationsmodul 470 neben der Beleuchtungsgrobabschätzung 410 beispielsweise noch eine Beschreibung der Wetterdaten 420, eine Beschreibung der realen Umgebung 430, eine Zeitinformation 440, oder eine weitere Information.

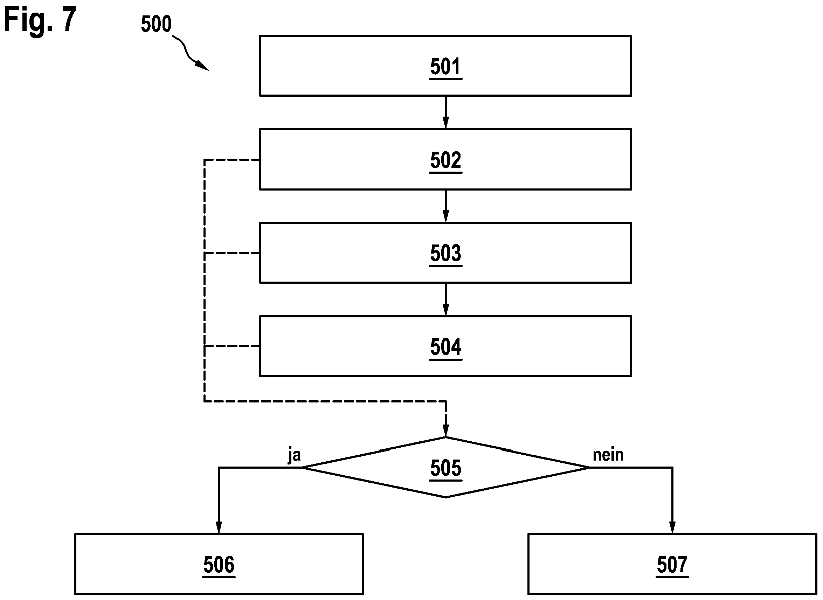

**Figur 7** zeigt ein Verfahren 500 gemäß eines Aspekts der vorliegenden Erfindung zur Bildverbesserung bei einem Fahrzeug 110. In einem Schritt 501 findet das Erfassen des Primärbildes 150, mittels einer Kamera 120, statt. Das Primärbild 150 wird in einem Schritt 502, mittels einer Vielzahl von Bildbearbeitungsfiltern 221, 222, 223, 224, in eine Vielzahl von Zwischenbildern 231, 232, 233, 234 transformiert. In einem Schritt 503 wird, für jedes der Zwischenbilder 231, 232, 233, 234, eine Qualitätsmaßzahl bestimmt. Schließlich wird, in einem Schritt 504, mittels eines Auswahlmoduls 260 das Zwischenbild mit der höchsten Qualitätsmaßzahl ausgewählt, und als Ergebnisbild 190 ausgegeben. Die Schritte 502 bis 504 hängen davon ab, ob ein neuronales Netz 300 während oder nach einer Lernphase betrieben wird. Während der Lernphase lernt das neuronale Netz 300 aus dem Primärbild 150, aus dem verwendeten Bildbearbeitungsfilter 221, 222, 223, 224 (über ein Interface 320) und dem Auswahlmodul 260 (über ein Interface 360), welcher Bildbearbeitungsfilter für welches Primärbild am geeignetsten ist. Nach der Lernphase wählt das neuronale Netz 300 den für dieses Primärbild 150 optimalen Bildbearbeitungsfilter (über das Interface 320) aus und gibt das Ergebnisbild 190 z.B. direkt über einen Ausgang 302 des neuronalen Netzes 300 an den Ausgang 202 des Bildbearbeitungsmoduls 200 aus.

## Patentansprüche

1. Verfahren zur automatischen Bildverbesserung in einem Fahrzeug (110), mit den Schritten:
- Erfassen eines Primärbildes (150), mittels einer Kamera (120);
- Transformieren des Primärbildes (150), mittels einer Vielzahl von Bildbearbeitungsfiltern (221, 222, 223, 224), in eine Vielzahl von Zwischenbildern (231, 232, 233, 234);
- Bestimmen, mittels eines Bewertungsmoduls (240), einer Qualitätsmaßzahl (241, 242, 243, 244) für jedes der, mittels des Bildbearbeitungsfilters (231, 232, 233, 234) transformierten, Zwischenbilder (231, 232, 233, 234);
- Auswählen, mittels eines Auswahlmoduls (260), des Zwischenbildes (231, 232, 233, 234) mit der höchsten Qualitätsmaßzahl (241, 242, 243, 244) und ausgeben als das Ergebnisbild (190),
wobei ein lernendes neuronales Netz (300) in einer Lernphase für jedes Primärbild (150) den Bildbearbeitungsfilter (221, 222, 223, 224), aus der Vielzahl von Bildbearbeitungsfiltern (221, 222, 223, 224), mit der höchsten Qualitätsmaßzahl (241, 242, 243, 244) des Zwischenbildes (231, 232, 233, 234) lernt, und
das lernende neuronale Netz (300) nach der Lernphase für jedes Primärbild (150) den Bildbearbeitungsfilter (221, 222, 223, 224), aus der Vielzahl von Bildbearbeitungsfiltern (221, 222, 223, 224), mit der höchsten Qualitätsmaßzahl (241, 242, 243, 244) des Zwischenbildes (231, 232, 233, 234) auswählt.

2. Verfahren nach Anspruch 1,
wobei das lernende neuronale Netz (300) weiterhin ein Kategorisierungsmodul (400) verwendet, das dazu eingerichtet ist, für jedes Primärbild (150) eine Beleuchtungskategorie (490) zu bestimmen.

3. Verfahren nach Anspruch 1 oder 2,
wobei mindestens einer aus der Vielzahl von Bildbearbeitungsfiltern (221, 222, 223, 224) dazu ausgeführt ist, ein bilaterales Gitter (165) zu verwenden.

4. Verfahren nach einem der vorhergehenden Ansprüche,
wobei Farbparameter des Primärbilds (158) getrennt von Parametern des bilateralen Gitters (165) verwendet werden.

5. Verfahren nach einem der vorhergehenden Ansprüche,
wobei die Vielzahl von Bildbearbeitungsfiltern (221, 222, 223, 224) einen Filter zur Veränderung der Helligkeit, einen Filter zur Veränderung des Kontrasts, einen Filter zur Veränderung der Farbe, einen Verzerrungsfilter, einen Schärfefilter und/oder einen weiteren Filter umfasst.

6. Verfahren nach einem der vorhergehenden Ansprüche, mit dem weiteren Schritt:
- Bestimmen, mittels eines ein Kategorisierungsmodul (400), einer Beleuchtungskategorie für jedes Primärbild (150),
wobei das lernende neuronale Netz (300) während der Lernphase für jedes Primärbild (150) und/oder für jede Beleuchtungskategorie den Bildbearbeitungsfilter (221, 222, 223, 224), aus der Vielzahl von Bildbearbeitungsfiltern (221, 222, 223, 224), mit der höchsten Qualitätsmaßzahl (241, 242, 243, 244) des Zwischenbildes (231, 232, 233, 234) lernt, und
nach der Lernphase für jedes Primärbild (150) und/oder für jede Beleuchtungskategorie (490) den Bildbearbeitungsfilter (221, 222, 223, 224), aus der Vielzahl von Bildbearbeitungsfiltern (221, 222, 223, 224), mit der höchsten Qualitätsmaßzahl (241, 242, 243, 244) des Zwischenbildes (231, 232, 233, 234) auswählt.

7. Verfahren nach Anspruch 6,
wobei das Kategorisierungsmodul (400) mindestens eines von
einer Beleuchtungsgrobabschätzung (410),
einer Beschreibung der Wetterdaten (420),
einer Beschreibung der realen Umgebung (430), oder
einer Zeitinformation (440), verwendet.

8. Verfahren nach einem der vorhergehenden Ansprüche,
wobei die Kamera (120) dazu eingerichtet ist, eine Sequenz von Primärbildern (150) zu erfassen.

9. Verfahren nach einem der vorhergehenden Ansprüche,
wobei, wenn ein vordefiniertes Qualitätskriterium erfüllt ist, das Ergebnisbild (190) gleich dem Primärbild (150) ist.

10. Vorrichtung (100) zur Bildverbesserung für ein Fahrzeug (110), die Vorrichtung (100) aufweisend:
eine Kamera (120), die dazu eingerichtet ist, ein Primärbild (150) zu erfassen, und
ein Bildbearbeitungsmodul (200), das dazu eingerichtet ist, aus dem Primärbild (150) ein Ergebnisbild (190) zu bestimmen,
wobei das Bildbearbeitungsmodul (200) aufweist:
eine Vielzahl von Bildbearbeitungsfiltern (221, 222, 223, 224), von denen jeder dazu eingerichtet ist, das Primärbild (150) in jeweils ein Zwischenbild (231, 232, 233, 234) zu transformieren,
ein Bewertungsmodul (240), das dazu eingerichtet ist, für jedes der, mittels des Bildbearbeitungsfilters (231, 232, 233, 234) transformierten,
Zwischenbilder (231, 232, 233, 234) eine Qualitätsmaßzahl (241, 242, 243, 244) auszugeben,
ein Auswahlmodul (260), welches dazu eingerichtet ist, das Zwischenbild (231, 232, 233, 234) mit der höchsten Qualitätsmaßzahl (241, 242, 243, 244) auswählt und als das Ergebnisbild (190) auszugeben, und
ein lernendes neuronales Netz (300), das dazu eingerichtet ist,
in einer Lernphase für jedes Primärbild (150) den Bildbearbeitungsfilter (221, 222, 223, 224), aus der Vielzahl von Bildbearbeitungsfiltern (221, 222, 223, 224), mit der höchsten Qualitätsmaßzahl (241, 242, 243, 244) des Zwischenbildes (231, 232, 233, 234) zu lernen, und
nach der Lernphase für jedes Primärbild (150) den Bildbearbeitungsfilter (221, 222, 223, 224), aus der Vielzahl von Bildbearbeitungsfiltern (221, 222, 223, 224), mit der höchsten Qualitätsmaßzahl (241, 242, 243, 244) des Zwischenbildes (231, 232, 233, 234) auszuwählen.

11. Bildbearbeitungsmodul (200), das dazu eingerichtet ist, aus dem Primärbild (150) ein Ergebnisbild (190) zu bestimmen,
wobei das Bildbearbeitungsmodul (200) aufweist:
eine Vielzahl von Bildbearbeitungsfiltern (221, 222, 223, 224), von denen jeder eingerichtet ist, das Primärbild (150) in jeweils ein Zwischenbild (231, 232, 233, 234) zu transformieren,
ein Bewertungsmodul (240), das dazu eingerichtet ist, für jedes der, mittels des Bildbearbeitungsfilters (231, 232, 233, 234) transformierten,
Zwischenbilder (231, 232, 233, 234) eine Qualitätsmaßzahl (241, 242, 243, 244) auszugeben,
ein Auswahlmodul (260), welches dazu eingerichtet ist, das Zwischenbild (231, 232, 233, 234) mit der höchsten Qualitätsmaßzahl (241, 242, 243, 244) auswählt und als das Ergebnisbild (190) auszugeben, und
ein lernendes neuronales Netz (300), das dazu eingerichtet ist,
in einer Lernphase für jedes Primärbild (150) den Bildbearbeitungsfilter (221, 222, 223, 224), aus der Vielzahl von Bildbearbeitungsfiltern (221, 222, 223, 224), mit der höchsten Qualitätsmaßzahl (241, 242, 243, 244) des Zwischenbildes (231, 232, 233, 234) zu lernen, und
nach der Lernphase für jedes Primärbild (150) den Bildbearbeitungsfilter (221, 222, 223, 224), aus der Vielzahl von Bildbearbeitungsfiltern (221, 222, 223, 224), mit der höchsten Qualitätsmaßzahl (241, 242, 243, 244) des Zwischenbildes (231, 232, 233, 234) auszuwählen.

12. Vorrichtung, die dazu eingerichtet ist, ein Verfahren nach einem der Ansprüche 1 bis 9 auszuführen.

13. Programmelement, welches, wenn es auf einer Prozessoreinheit ausgeführt wird, dazu eingerichtet ist, ein Verfahren nach einem der Ansprüche 1 bis 9 durchzuführen.

14. Computerlesbares Medium, auf dem ein Programmelement nach Anspruch 13 gespeichert ist.
